**Europäisches Patentamt**

**European Patent Office**

**Office européen des brevets**

(19)

(11) Veröffentlichungsnummer: **0 480 214 A1**

(12) # EUROPÄISCHE PATENTANMELDUNG

(21) Anmeldenummer: **91115904.4**

(22) Anmeldetag: **19.09.91**

(51) Int. Cl.⁵: **F03B 17/02**

(30) Priorität: **25.09.90 DE 4030226**

(43) Veröffentlichungstag der Anmeldung:
**15.04.92 Patentblatt 92/16**

(84) Benannte Vertragsstaaten:
**DE ES FR GB IT**

(71) Anmelder: **Brüggemann, Erich, Dr.**
**Königsberger Strasse 12**
**W-2970 Emden(DE)**

(72) Erfinder: **Brüggemann, Erich, Dr.**
**Königsberger Strasse 12**
**W-2970 Emden(DE)**

(54) **Kraftspender.**

(57) Der Kraftspender besteht aus mindestens einer Führung, an der ein mit einem Gegengewicht verbundener Träger mittels Gleitvorrichtungen herauf- und herabgeführt wird. Auf dem Träger befindet sich ein aufwärtsgerichtetes Kraftspeicherelement (z. B. Auftriebskörper in einem mit Flüssigkeit gefüllten Gefäß; Federanordnung usw.). Auf dem Weg abwärts ist die nach oben gerichtete Wirkung des Kraftspeicherelementes eingeschränkt, weil sie teilweise neutralisiert wird. Das Kraftspeicherelement ist nämlich auf dem Abwärtsweg zur anderen Seite des Trägers mit einem nach unten führenden Verbindungselement verbunden, welches zunächst nach unten und dann über eine mechanische Einrichtung, die eine Verlängerung des Verbindungselementes aufnimmt, möglichst weit seitwärts zu dem Ende des horizontal verlaufenden Endstückes eines Auslegers führt. Der Ausleger ist an dem Träger oder dem Gleitkörper unterhalb des Trägers befestigt.

Dieses Verbindungselement läuft über die bezeichnete mechanische Einrichtung, die außerhalb des beweglichen Systems angebracht ist und welche die Kraftrichtung des Verbindungselementes ändert, ohne die Größe der Kraft zu beeinflussen.

Durch die mechanische Einrichtung wird auf dem Abwärtsweg aber von außen in die Auftriebswirkung eingegriffen, deren Richtung von außen geändert wird. Dagegen wirkt sich die nach unten gerichtete Gegenwirkung des Auftriebselementes ohne Einschränkung in vollem Umfang aus.

Die nach oben gerichtete Wirkung des Kraftspeicherelementes wird hierdurch auf dem Abwärtsweg eingeschränkt. Auf dem Aufwärtsweg dagegen sind Wirkung und Gegenwirkung ausgeglichen. Die schräge Verbindung zum Kraftelement wird durch eine Umstellung gelockert und das Kraftelement wird auf dem Aufwärtsweg des Gefäßes durch eine Verriegelung gehalten. Die Gegenwirkung des Kraftelementes nach oben entspricht dann seiner Wirkung nach unten, was auf dem Abwärtsweg der Plattform nicht der Fall ist. Aufgrund dieser unterschiedlichen Kräfte, Wirkung und Gegenwirkung entsteht ein Energiegewinn.

EP 0 480 214 A1

vor
Abwärtsweg

*Zg. 3*

## A/ Bestandteile

Ein nach unten und oben beweglicher Träger (2) ist über feststehende Umlenkungseinrichtungen (3) mit einem Gegengewicht (4) verbunden. Bei einer Bewegung nach unten oder oben läuft der Träger (2) an mindestens einer senkrechten Führung (1) mittels Gleitkörper (5) entlang und kann an dieser Führung (1) herauf- und herabgeführt werden.

An der Seite des Trägers (2) befindet sich ein nach oben wirkendes Kraftspeicherelement (7) (z. B. Auftriebskörper in einem Gefäß mit Flüssigkeit, eine Hydraulikvorrichtung, eine Federeinrichtung, ein fester Stab usw.). In dieser Patentbeschreibung wird als Beispiel eines nach oben wirkenden Kraftspeicherelementes von einem Auftriebskörper in einem Flüssigkeitsbehälter ausgegangen.

Dieser Auftriebskörper (7) befindet sich in einem mit Flüssigkeit gefüllten Gefäß (6) auf dem Träger (2).

Dieser in der Flüssigkeit befindliche Auftriebskörper (7) hat eine Tendenz nach oben. Er wird in seiner Position bei der Bewegung des Gefäßes nach unten gehalten durch ein Verbindungselement (9), das durch ein Rohr (8), abgedichtet durch den Boden des Gefäßes (6) und des Trägers (2) führt. In dem Rohr (8) befindet sich ein Widerstand, der nach unten gerichtete Kräfte des Verbindungselementes (9) aufnehmen kann und auf den Träger (2) überträgt.

Von dort führt das Verbindungsband (9) zunächst nach unten zu einer auf das Verbindungselement (9) wirkenden mechanischen Einrichtung (10) (im folgenden mechanische Einrichtung genannt). Diese mechanische Einrichtung nimmt bei den Bewegungsabläufen längsseits (z. B. abwärts und aufwärts) eine auftretende Verlängerung des Verbindungselementes (9) auf und ist nicht systemimmanent, insbesondere hat sie keine Verbindung mit dem Träger (2) und dem Ausleger (11). Von dort führt das Verbindungselement (9) seitlich zum Ende des Auslegers (11), der von dem Träger (2) oder von der Gleitvorrichtung (5) unter dem Gefäß (6) nach unten tiefer als die mechanische Einrichtung (10) führt und von dort in einem Winkel von 90 ° möglichst weitgehend seitwärts zu der dem Gefäß (6) gegenüberliegenden Seite.

Bei dem Weg nach unten bleibt die Position der mechanischen Einrichtung (10) unverändert. Sie befindet sich außerhalb des sich bewegenden Systems bei Beginn des Abwärtsweges etwas höher als der seitwärtsverlaufende Teil des Auslegers (11). Nach Beendigung des Abwärtsweges ist die mechanische Einrichtung (10), die ihre Positon nicht verändert, in den Bereich unterhalb des Trägers (2) gelangt.

Wenn der Träger (2) unten angekommen ist, trifft er auf einen Widerstand (12). Dieser Widerstand (12) führt zu einer Verriegelung (13) oberhalb des Auftriebskörpers (7) und danach zu einer Lockerung des Verbindungselementes (9). Auf dem Weg nach oben wird der Auftriebskörper (7) nicht mehr durch das Verbindungselementes (9), sondern nur noch durch die Verriegelung (13) gehalten, bis am oberen Wendepunkt durch einen weiteren oben angebrachten Widerstand (12) das Verbindungsband gestrafft und danach die Verriegelung (13) geöffnet wird.

## B/ Wirkungsweise

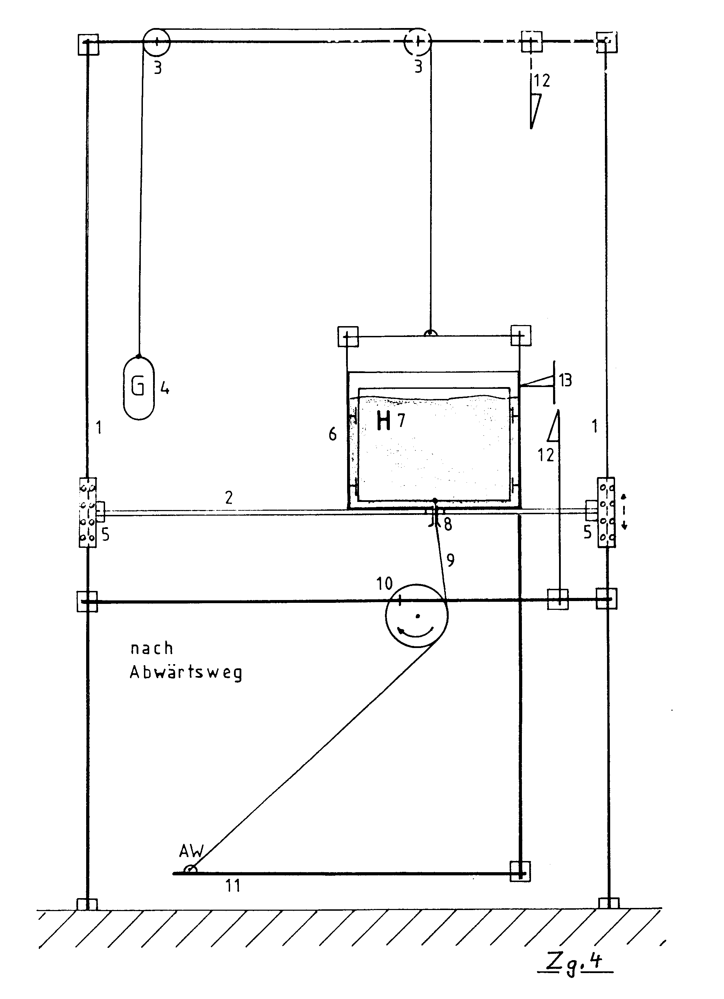

### I/ Abwärtsweg (vgl. Zeichnung 3)

Der Träger (2) befindet sich zunächst oben an der Führung (1). Der Auftriebskörper (7) ist durch das Verbindungselement (9), welches über die feste mechanische Einrichtung (10) läuft, mit dem Ende des Auslegers (11) auf der dem Gefäß (6) gegenüberliegende Seite verbunden. Das Ende des Auslegers (11) befindet sich soweit wie möglich seitwärts. Die Wirkung des Verbindungselementes (9), welche zum Auftriebskörper (7) führt, ist eingeschränkt, weil sich die Kraft des über die mechanische Einrichtung (10) laufenden Verbindungselementes (9) zwar nicht verändert, aber - vom Punkt AW am Ende des Auslegers (11) aus gesehen - in eine andere Richtung gelenkt wird. Der gestiegene Flüssigkeitsspiegel stellt mit dem höheren hydrostatischen Druck dagegen ohne Einschränkung die Gegenwirkung dar. Deshalb senkt sich der Träger (2) mit dem Gefäß (6). Die mechanische Einrichtung (10) gelangt in den Bereich unterhalb des Trägers (2). Dabei erhält das Verbindungselement (9) zum Ausleger (11) einen schrägeren Verlauf und kürzt sich durch die mechanische Einrichtung (10) etwas auf, die bei der Abwärtsbewegung eines auftretende Verlängerung des Verbindungselementes (9) aufnimmt.

Das Gegengewicht (4), das etwas größer ist als das Gewicht des Trägers (2), des Auslegers (11), der Flüssigkeit, der Verriegelung (13) und des Auftriebskörpers (7), wird nach oben gezogen, denn der Auftriebskörper (7) wirkt dem erhöhten Bodendruck nicht voll entgegen. Die Flüssigkeitssäule ist um das Volumen des Auftriebskörpers (7) erhöht. Der Auftrieb des Auftriebskörpers (7) kann sich jedoch nicht voll entfalten. Das vom Auftriebskörper (7) führende Verbindungselement (9) läuft über die mechanische Einrichtung (10) ohne die Größe ihrer Kraft zu ändern, wohl aber die Kraftrichtung, so daß die Richtung der Auftriebswirkung nicht mehr genau dem lotrecht nach unten gerichteten hydrostatischen Druck entgegengesetzt ist und entsprechend ein Teil der Auftriebskraft von der mechanischen Einrichtung (10) aufgefangen wird.

Das Gefäß (6) ist mithin durch den erhöhten hydrostatischen Druck "schwerer" geworden, weil der Auftrieb des Auftriebskörpers (7) nicht den vollen Ausgleich erreicht, sondern durch die Richtungsänderung des Verbindungselementes (9) teilweise neutralisiert wird.

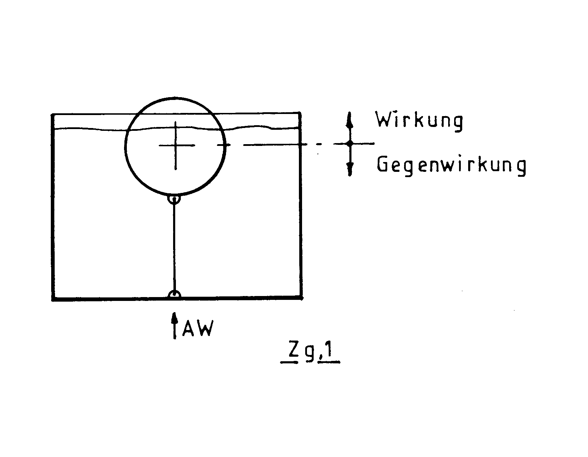

## II/ Aufwärtsweg (vgl. Zeichnung 4)

Ist der Träger (2) an der Führung (1) unten angekommen, so tritt die Umstellung ein (vgl. Abschnitt Umstellung). Durch eine Riegelvorrichtung (13) - ausgelöst durch den Widerstand (12) - wird der Auftriebskörper (7) gehalten und das Verbindungselement (9) wird gelockert. Es wirkt also nur das Gewicht des Trägers (2), des Auslegers (11), der Verriegelung (13) des Gefäßtes (6), des Auftriebskörpers (7) und der Flüssigkeit. Das Gegengewicht (4) ist etwas größer und zieht den Träger (2) mit allem was mit ihm verbunden ist nach oben. In der oberen Position wird durch den Widerstand (12) das Verbindungselement (9) gestrafft und danach die Riegelvorrichtung (13) geöffnet.

## C/ Umstellung

Für die Umstellung bestehen mehrere Möglichkeiten, von denen eine beispielsweise dargestellt wird.

Wenn der Träger (2) mit einer gewissen Eigengeschwindigkeit unten angelangt ist, so trifft er auf einen Widerstand (12) und löst damit die Verriegelung (13) oberhalb des Auftriebskörpers (7) aus, die dann den Auftriebskörper (7) in seiner Position festhält. Unmittelbar danach führt dieser Widerstand zu einer Lockerung des Verbindungselementes (9). Der Auftriebskörper (7) wird auf dem Weg nach oben nicht mehr durch das Verbindungselement (9), sondern nur noch durch die Verriegelung (13) gehalten.

Ist der Träger (2) oben angelangt, so trifft der Träger (2) wiederum auf einen Widerstand (12), der das Verbindungselement (9) strafft und dann die Verriegelung (13) öffnet.

Auf dem Weg nach unten wirkt der Auftrieb durch die Richtungsänderung des Verbindungselementes (9) nur teilweise. Mithin wirkt der Auftrieb nur eingeschränkt der Gegenwirkung entgegen, die auf dem erhöhten Bodendruck beruht, welcher wieder auf die gestiegene Flüssigkeitssäule zurückzuführen ist.

## D/ Bewegungsablauf

Im oberen Umkehrpunkt wird die Verriegelung (13) mittels Auflauf (Widestand 12) zwischen dem Gefäß (6) und dem Auftriebskörper (7) gelöst. Anschließend will der Auftriebskörper (7) aufschwimmen und seine Verdrängung abzüglich des Eigengewichts bildet die Seilzugkraft im Verbindungselement (9). Diese Seilzugkraft im Verbindungselement (9) wird durch die mechanische Einrichtung (10) umgelenkt und ist nicht der Gegenwirkung des hydrostatischen Druckes genau entgegengesetzt, sondern nur nachlassend seitwärts. Unter der Gegenwirkung des hydrostatischen Druckes bewegt sich die aus Träger (2), Gefäß (6), Auftriebskörper (7), Verriegelungselement (13) und Ausleger (11) sowie Flüssigkeit gebildete Einheit nach unten. Dabei schwenkt sich die exzentrisch gelagerte Rolle (10), so daß sie die an sich auftretende Verlängerung des Verbindungselementes (9) aufnimmt.

Wenn diese Einheit am unteren Endpunkt ankommt, wird die Verriegelung (13) wieder mittels Auflauf (Widerstand 12) aktiviert. Auftriebskörper (7) wird mit dem Gefäß (6) sowie dem Träger (2) verriegelt und das Verbindungselement (9) gelokkert. In dieser Stellung ist jetzt das Gegengewicht (4) größer als das Gewicht aller mit dem Träger (2) verbundenen Bauelemente, so daß die mit dem Träger (2) verbundenen Bauelemente 2 - 13 (ohne 3, 10 und 12) nach oben laufen. Der Exzenter wird dabei zurück in seine Ausgangsposition bewegt.

## E Energiebilanz I.

Bei unterschiedlicher Kräftewirkung und Gegenwirkung entsteht ein Energiegewinn, weil im vorliegenden Fall die Wirkung des Auftriebs nur eingeschränkt dem erhöhten Bodendruck (Gegenwirkung) entgegengesetzt ist. Ein Teil der Auftriebskraft ist infolge der Richtungsänderung dieser Kraft ohne Einfluß. Die Richtungsänderung wird durch die nicht systemimmanent mechanische Einrichtung (10) bewirkt, welche zugleich entsprechenden Auftrieb aufnimmt, ohne daß hierbei die Größe der Kraft sich ändert.

Die Gegenwirkung (hydrostatischer Druck) entfaltet sich durch teilweise Neutralisierung der Auftriebswirkung in stärkerem Maße, als es dem Prinzip des Ausgleichs von Wirkung und Gegenwirkung entspricht. Das Ausmaß dieser Einschränkung der Wirkung ist davon abhängig, inwieweit sich die Richtung der Auftriebswirkung vom Punkt AW gesehen ändert und von der lotrechten Linie des nach unten gerichteten hydrostatischen Druckes (Gegenwirkung) abweicht. Sind die Kräfte Wirkung und Gegenwirkung nicht mehr ausgleichend gegeneinander gerichtet, entsteht ein Energiegewinn, dessen Ausmaß davon abhängt, in welchem Umfang die Richtung der Auftriebswirkung von der Lotrechten abweicht und sich der Horizontalen annähert.

Der Satz von der Erhaltung der Energie beruht mit darauf, daß Wirkung und Gegenwirkung sich ausgleichen. Wenn die obigen Annahmen zutreffend sind, entsteht ein Energiegewinn.

II.

Je weiter der Punkt AW, zu dem das untere Ende des Verbindungsbandes führt, seitwärts von der festen Exzenter Einrichtung verlegt wird, um so mehr weicht die Richtung der Auftriebswirkung - von AW aus gesehen - von der lotrechten Linie ab. Der Winkel wird flacher. Es wird dann aber nicht nur der Überschuß größer, sondern mit der Verlegung des Punktes AW seitwärts verringert sich zugleich beim Abwärtsweg die im Verbindungselement entstehende Lose. Die zum Ausgleich dieser Lose benötigte Energie wird geringer.

III.

Die Energiebilanz ist positiv. Beim Abwärtsweg entsteht ein Überschuß, der um so größer wird, je flacher das Verbindungsband von der festen Rolle mit Exzenter Einrichtung zum Punkt AW verläuft.

Auch der mögliche negative Posten der Energiebilanz, nämlich der Ausgleich der Lose, wird bei der möglichst weiten Verlagerung des Punktes AW zur Seite hin geringer, weil auch dann die Lose geringer ist. Wenn zum Ausgleich der verbleibenden Lose Energie aufzuwenden ist, so führt dies auch im Verbindungselement zu einem höheren Kraftansatz. Ein etwaiger zusätzlicher Kraftansatz im Verbindungselement würde aber auch am oberen Ende des Verbindungselementes lotrecht nach unten ziehen, während der Zug nach oben von der Lotrechten abweicht und deshalb nur eingeschränkt wirkt.

Dieser mögliche negative Posten der Energiebilanz wird weitgehend vermieden, wenn nach Ziffer 11 der Patentansprüche verfahren und eine feste Rolle verwandt wird. Durch eine weitere feste Rolle wird die Lose ausgeglichen, ohne daß hierbei Energie aufzuwenden ist.

Ebenfalls können die übrigen negativen Leistungsposten (öffnen der Riegel und Straffen des Bandes) gering gehalten werden, wenn bei der Auslösung der Riegelvorrichtung unten erst verriegelt und danach das Verbindungsband gelockert wird und am oberen Wendepunkt das Band erst gestrafft und danch entriegelt wird.

Hinweis

(für nachstehende Patentbeschreibung, Patentansprüche und Zusammenfassung)

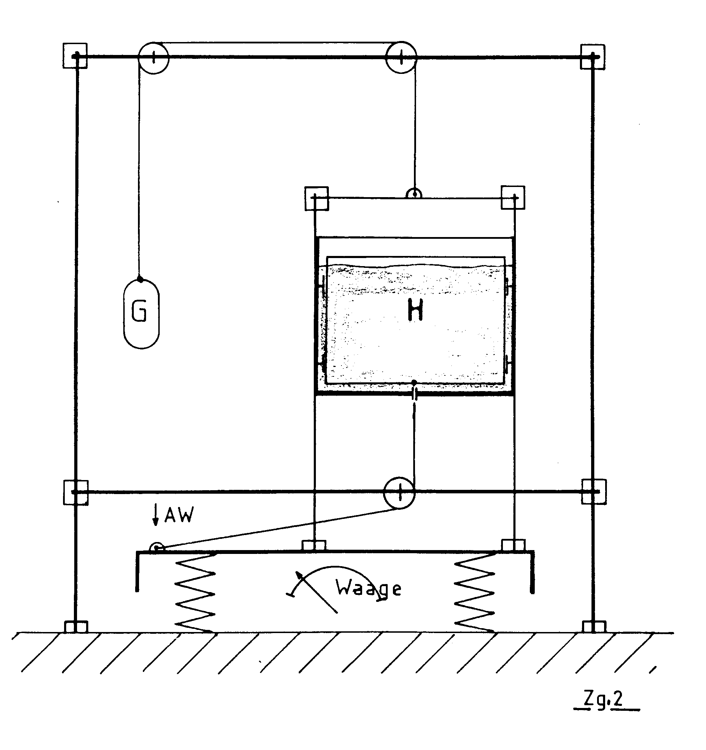

I/ Wenn man in einem Gefäß, das mit Wasser oder einer sonstigen Flüssigkeit gefüllt ist, am Boden mit einem Band einen Hohlkörper H befestigt, so verdrängt das Volumen des Hohlkörpers eine entsprechende Menge Wasser. Dieser Hohlkörper wird durch das zum Boden des Gefäßes führende Band gehalten und zieht als Wirkung nach oben (vgl. Zeichnung 1).

Durch diese Verdrängung steigt die für die Schwerkraft maßgebliche Flüssigkeitssäule und in diesem Ausmaß steigt auch der hydrostatische Druck auf der Bodenfläche des Gefäßes. Die entsprechende nach unten gerichtete Gegenwirkung vergrößert sich (vgl. Zeichnung 1).

Diese Gegenwirkung wird aufgehoben durch den Auftrieb des Hohlkörpers, der das zum Boden führende Band nach oben zieht. Dieser Auftrieb wirkt sich an dem Punkt aus, an welchem das Band und damit der Auftrieb mit dem Boden verbunden ist. An diesem Punkt ist er der Gegenwirkung entgegengesetzt. Dieser Punkt wird im folgenden mit Auftriebswirkung (AW) bezeichnet (vgl. Zeichnung 1).

Der für die Schwerkraft maßgebliche hydrostatische Druck steigt, obwohl der Anstieg der Flüssigkeitssäule auf die Verdrängung des Wassers durch den Hohlkörper H zurückzuführen ist. Die höhere Flüssigkeitssäule und damit der hydrostatische Druck beruht auf einer Wassermasse, die von dem weitgehend gewichtslosen Hohlkörper verdrängt ist (vgl. Zeichnung 1).

Der Auftrieb dieses Hohlkörpers entsteht nicht unmittelbar durch Schwerkraft. Eine Masse wird durch die Erdanziehungskraft angezogen. Eine entsprechende Anziehungskraft, die den Hohlkörper in entgegengesetzter Richtung anzieht, fehlt. Der Auftrieb beruht vielmehr auf den unterschiedlichen Drücken der den Hohlkörper umgebenden Flüssigkeit, die im unteren Bereich des Hohlkörpers größer sind als im oberen Bereich und die den Hohlkörper nach oben drücken bzw. stoßen.

II/

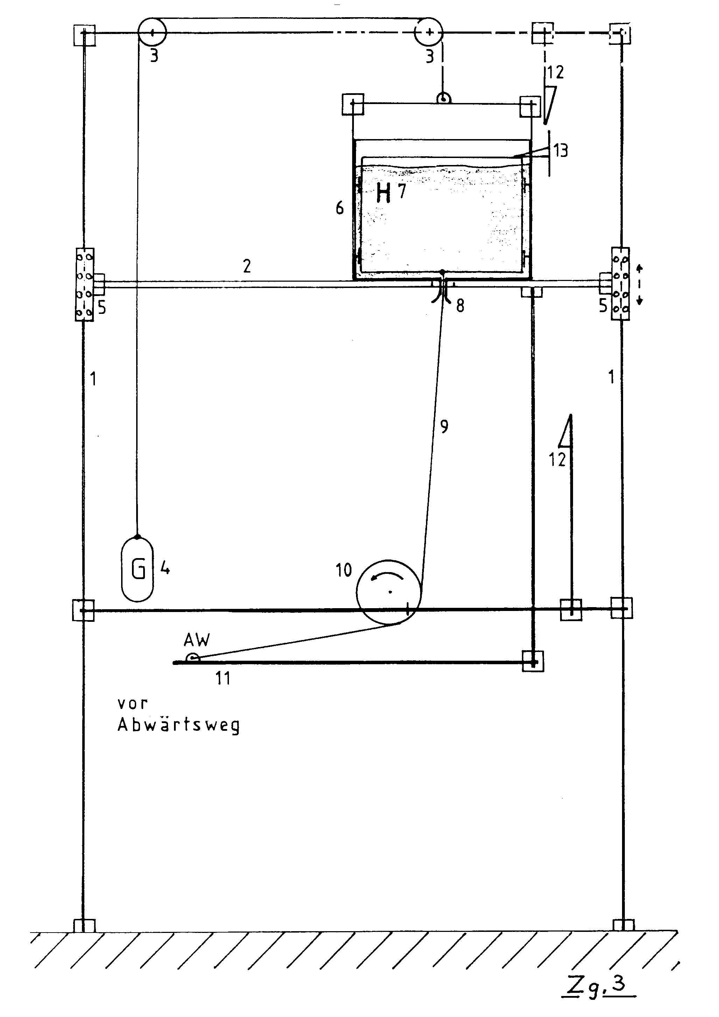

Führt man das Band zum Hohlkörper von unten in das Gefäß, das die Flüssigkeit mit Hohlkörper aufnimmt, so besteht diese Wirkung (Auftrieb des Hohlkörpers nach oben) im Punkt AW dann nur eingeschränkt, wenn das von dem Hohlkörper lotrecht nach unten führende Band über eine außerhalb des beweglichen Systems angebrachte feste Rolle seitwärts geführt wird. Die Umlenkung verändert nur die Kraftrichtung, nicht jedoch die Größe der Kraft. Durch diese feste Rolle wird aber von außen in die Auftriebswirkung eingegriffen, deren Kraftrichtung von außen geändert und deren Auftrieb im entsprechenden Umfang von der Rolle aufgefangen wird (vgl. Zeichnung 2).

Stellt man einen Tisch auf eine Waage, auf dem sich das Gefäß mit Flüssigkeit und Hohlkörper befindet, so kann man eine Verbindung durch den Tisch nach unten herstellen. Wenn man die Verbindung vom Hohlkörper nach unten über eine von der Waage unabhängige feste Rolle seitwärts umlenkt und an der Waage befestigt, dann wird der Tisch mit Gefäß durch den erhöhten hydrostatischen Druck "schwerer", denn die Wirkung stimmt nicht mit der Gegenwirkung überein, sondern die Auftriebswirkung ist in dem maßgeblichen Punkt AW in ihrer Richtung geändert und nicht mehr der Gegenwirkung richtungsmäßig genau entgegengesetzt (vgl. Zeichnung 2).

Diese Überlegung läßt sich beim Absenken des Gefäßes nach unten durch ein Gegengewicht nutzen, denn auf dem Abwärtsweg ist - wie im vorstehenden kurz dargelegt - das Gefäß "schwerer" geworden. Die feste Rolle ändert ihre Position nicht, sondern bei diesem Bewegungsablauf bewegt sich nur das Gefäß mit Flüssigkeit nebst Hohlkörper, und zwar nach unten, während die feste Rolle hierbei näher zum Gefäß gerät. Bei diesem Vorgang erfolgt durch die feste Rolle bei gleichbleibenden Kräften nur eine Richtungsänderung dieser Kräfte, wenn auch von unterschiedlichem Ausmaß und eine entsprechende Aufnahme von Auftriebskräften. Die an der Rolle wirkenden Kräfte bleiben außer Betracht, weil sich die feste Rolle außerhalb des sich bewegenden Systems befindet. Wenn das Gefäß mit Flüssigkeit nebst Hohlkörper unten angekommen ist, wird der Zug des Bandes auf den Hohlkörper unterbrochen und damit der Hohlkörper entfesselt. Vom Gegengewicht ist nur noch die vorhandene Wassermenge sowie das Gewicht der Apparatteile nach oben zu ziehen.

III/

Zusammengefaßt läßt sich sagen:

Die Auftriebswirkung erfährt durch eine feste Rolle außerhalb des beweglichen Systems in Form eines Exzenters eine Richtungsänderung in größerem Umfang und dann abnehmend. Diese feste Rolle gerät im Verlauf der nach unten gerichteten Bewegung des Gefäßes mit Flüssigkeit mehr und mehr in die Nähe dieses sich nach unten bewegenden Gefäßes. Das Band, das um die feste Rolle geführt wird, endet im unteren Teil des beweglichen Systems (Punkt AW; Zeichnung 2).

Die feste Rolle, die außerhalb des beweglichen Systems angebracht ist, hat die entscheidende Funktion, indem sie die Kraftrichtung des Bandes ändert und Auftriebskräfte aufnimmt. Die Richtung der Auftriebswirkung ist nicht mehr dem lotrecht nach unten gerichteten hydrostatischen Druck entgegengesetzt, sondern trifft diesen zunächst fast quer und im Laufe der Abwärtsbewegung in einem sich vergrößernden Winkel. Damit wird die Auftriebswirkung teilweise neutralisiert.

Das gilt für die Auftriebswirkung im Punkt AW. Soweit die Auftriebswirkung durch den Hohlkörper Flüssigkeit verdrängt und zu einer Steigerung der für das Schwerefeld maßgeblichen Flüssigkeitssäule führt, bleibt die Auftriebswirkung voll erhalten.

Bei der Annäherng der festen Rolle an das sich nach unten bewegende Gefäß verkürzt sich zwangsläufig das Band, was durch eine Exzentereinrichtung aufgefangen wird. Es handelt sich hierbei um eine mechanische Einrichtung, die bei der Abwärtsbewegung die auftretende Verlängerung der Verbindung aufnimmt und damit die Verbindung konstant hält (z. B. Exzenter, Auflauf-Rolle, Nachlauf-Arm mit Spanneinrichtung, u. ä.), in dieser Patentanmeldung mechanische Einrichtung genannt, die bei den Bewegungsabläufen längsseits (z. B. abwärts und aufwärts) eine auftretende Verlängerung des Verbindungselementes aufnimmt.

Von außen wird also in die Auftriebswirkung eingegriffen, deren Kraftrichtung von außen geändert wird und deren Auftrieb entsprechend von der festen mechanischen Einrichtung aufgefangen wird.

Es gibt neben dem Auftrieb von Auftriebskörpern in Flüssigkeitsbehältern auch weitere Beispiele von nach oben wirkenden Kraftspeicherelementen. In der folgenden Patentbescheidung wird als Beispiel eines nach oben wirkenden Kraftspeicherelementes von einem Auftriebskörper in einem Flüssigkeitsbehälter ausgegangen.

Dabei wird bemerkt, daß vor dieser Patentanmeldung das beschriebene Prinzip unterschiedlicher Kräftewirkung und Gegenwirkung durch einen Versuch in ruhendem Zustand bestätigt wurde (Anordnung wie in Zeichnung 2).

## Patentansprüche

1. Kraftspender gekennzeichnet durch
   a) mindestens eine senkrechte Führung (1),
   b) an welcher ein Träger (2) zwischen einem oberen und unteren Endpunkt mittels Gleitkörper (5) längsverschiebbar gelagert ist. Der Träger (2) steht mit einem Gegengewicht (4) über feste Umlenkungseinrichtungen (3) in Verbindung,
   c) ein auf diesen Träger (2) befindliches längsseits (z. B. nach oben) wirkendes Kraftspeicherelement (7), das mit dem Träger (2) durch eine Verriegelung (13) festsetzbar ist,
   d) ein das Kraftspeicherelement (7) mit einem trägerfesten Ausleger (11) verbindende Verbindungselement (9), wobei der Ausleger (11) entgegen der Wirkungsrichtung des sich entspannenden Kraftspeicherelementes (7) gerichtet ist und der Endpunkt des Verbindungselementes (9) zum Kraftspeicherelement (7) einen vorgegebenen Seitenabstand hat. Das Verbindungselement (9) führt durch ein Rohr (8), das mit dem Träger (2) verbunden ist, zum Kraftspeicherelement (7). In dem Rohr (8) befindet sich ein Widerstand, der nach unten gerichtete Kräfte des Verbindungselementes (9) aufnehmen kann,
e) eine auf das Verbindungselement (9) wirkende mechanische Einrichtung (10), die bei den Bewegungsabläufen längsseits (z. B. abwärts und aufwärts) eine auftretende Verlängerung des Verbindungselementes (9) aufnimmt und die nicht systemimmanent ist, insbesondere keine Verbindung zum Träger (2) und mit dem Träger (2) verbundenen Ausleger (11) hat,
f) wobei das aufgrund eines Widerstandes (12) ausgelöste Verriegelungselement (13) des Kraftspeicherelementes (7) von dem Träger (2) entriegelt und das Verbindungselement (9) vorher gestrafft wird, wenn der Träger (2) mit dem Kraftspeicherelement (7) unter der Wirkung des Gegengewichtes (4) den (z. B. oberen) Umkehrpunkt erreicht,
g) wobei das aufgrund des Widerstandes (12) ausgelöste Verriegelungselement (13) das Kraftspeicherelement (7) mit dem Träger (2) verriegelt und danach das Verbindungselement (9) lockert, wenn der Träger (2) aufgrund der aus dem Kraftspeicherelement (7) auf den Träger (2) wirkenden Kraft den entgegengesetzten (z. B. unteren) Umkehrpunkt erreicht hat.

2. Kraftspender nach Anspruch 1. dadurch gekennzeichnet, daß das Kraftspeicherelement (7) durch ein auf den Träger (2) angeordnetes mit Flüssigkeit gefülltes Gefäß (6) und einem Auftriebskörper (7) in dem Gefäß (6) verkörpert wird, wobei das Verbindungselement (9) durch Träger (2) und Gefäß (6) hindurchgeführt und an dem Auftriebsköper (7) befestigt wird.

3. Kraftspender nach Anspruch 1, dadurch gekennzeichnet, daß das Kraftspeicherelement durch eine Federanordnung verkörpert wird.

4. Kraftspender nach Anspruch 1, dadurch gekennzeichnet, daß das Kraftspeicherelement durch eine Hydraulikvorrichtung verkörpert wird.

5. Kraftspender nach Anspruch 1, dadurch gekennzeichnet, daß das Kraftspeicherelement durch einen festen Stab verkörpert wird.

6. Kraftspender nach Anspruch 1 bis 5, dadurch gekennzeichnet, daß der Ausleger (11) an seinem freien Ende abgewinkelt ist und daß das Verbindungselement (9) am abgewinkelten Ende des Auslegers (11) befestigt ist.

7. Kraftspender nach vorgehenden Ansprüchen, dadurch gekennzeichnet, daß das Verbindungselement (9) zwischen dem Kraftspenderelement (7) und der die Lose aufnehmenden Einrichtung (10) im wesentlichen parallel zum Ausleger (11) und anschließend seitwärts versetzt zum Befestigungspunkt (AW) am Ausleger (11) verläuft.

8. Kraftspender nach vorgehenden Ansprüchen, dadurch gekennzeichnet, daß die die Lose aufnehmende Einrichtung (10) eine exzentrisch gelagerte Rolle ist, über welche das Verbindungselement (9) geführt wird.

9. Kraftspender nach vorgehenden Ansprüchen, dadurch gekennzeichnet, daß statt des Gegengewichts (4) eine Federanordnung angebracht ist, die gleichmäßig herabzieht und heraufzieht.

10. Kraftspender nach vorgehenden Ansprüchen, deren Verbindungselement (9) einen anderen Verlauf nimmt und schräg nach unten geführt wird. Es sind alle anders verlaufenden Verbindungen erfaßt, bei denen die Kraftwirkung des aufwärtsgerichteten Kraftspeicherelementes (7) dadurch verringert wird, daß das nach unten verlaufende über eine mechanische Einrichtung (10) führende Verbindungselement (9) und die sich in diesem Verbindungselement fortsetzenden Auftriebskräfte in ihrer Richtung geändert und dadurch Kräfte neutralisiert werden.

11. Kraftspender nach vorgehenden Ansprüchen, dadurch gekennzeichnet, daß statt einer mechanischen Einrichtung Einrichtung (10) nur eine normale feste Rolle angebracht ist. Die erforderliche Verkürzung erfolgt durch eine weitere feste Rolle, die seitwärts tiefer angebracht ist. Diese weitere feste Rolle nimmt beim Abwärtsweg das Verbindungselement nach und nach teilweise auf, so daß hierdurch die notwendige Aufnahme der Lose des Verbindungselementes eintritt.

G

H

↓AW

Waage

Zg.2

vor
Abwärtsweg

Zg.3

3
3
12
G 4
1
13
H 7
6
12
2
5
8
9
10
5
nach
Abwärtsweg
AW
11

_Zg. 4_

Zg. 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 622 970 (BRÜGGEMANN) <br> * Ganze Beschreibung * <br> – – – | 1,2 | F 03 B 17/02 |
| A | FR-A-2 259 250 (REID) <br> * Seite 7, Zeile 32 - Seite 9, Zeile 25; Abbildung 2a,b,c * <br> – – – | 1,2,10 | |
| A | PATENT ABSTRACTS OF JAPAN, Band 9, Nr. 3 (M-349)[1726], 9. Januar 1985; <br> & JP-A-59 155 579 (SHIYOUICHI HONDA) 04-09-1984 <br> – – – – – | 1,2,10 | |

|  | RECHERCHIERTE SACHGEBIETE (Int. Cl.5) |
|---|---|
|  | F 03 B |

Der vorliegende Recherchenbericht wurde für alle Patentansprüche erstellt

| Recherchenort | Abschlußdatum der Recherche | Prüfer |
|---|---|---|
| Den Haag | 25 Oktober 91 | DE WINTER P.E.F. |